# EUROPÄISCHE PATENTSCHRIFT

(11) **EP 2 738 069 B1**
(45) Veröffentlichungstag und Bekanntmachung des Hinweises auf die Patenterteilung: **11.01.2017**
(21) Anmeldenummer: 13193659.3
(22) Anmeldetag: 20.11.2013
(51) Int. Cl.: B62D 21/11, B60L 5/00, B60L 11/18

(54) **Hilfsrahmen für ein Kraftfahrzeug**
Subframe for a motor vehicle
Berceau de véhicule automobile

(30) Priorität: 29.11.2012 DE 102012023363
(43) Veröffentlichungstag der Anmeldung: 04.06.2014
(73) Patentinhaber: AUDI AG, 85045 Ingolstadt (DE)
(72) Erfinder: Isakiewitsch, Christian, 85051 Ingolstadt (DE); Achhammer, Siegfried, 93049 Regensburg (DE); Rugies, Stefan, 93051 Regensburg (DE); Elias, Björn, 85120 Hepberg (DE)

(56) Entgegenhaltungen:
- WO-A1-2012/157333
- DE-A1-102009 029 883
- FR-A1- 2 968 605

## Beschreibung

Die vorliegende Erfindung betrifft einen Hilfsrahmen eines Vorder- oder Hinterwagens eines Kraftfahrzeugs mit zwei Längsträgern, die in Fahrzeugquerrichtung voneinander beabstandet und über wenigstens einen Querträger miteinander verbunden sind, wobei der Hilfsrahmen eine Versteifungsstruktur zur Erhöhung der Torsionssteifigkeit aufweist.

Derartige Hilfsrahmen dienen im Kraftfahrzeugbau der Befestigung der aufbauseitigen Anlenkpunkte einer Radaufhängung. Zumeist am Hilfsrahmen des Vorderwagens können zusätzlich auch eine Kraftmaschine, ein Getriebe und/oder eine Lenkung befestigt sein. Der Hilfsrahmen selbst wird in der Regel elastisch mittels Gummilagern an die Karosserie angebunden. Die Versteifungsstruktur kann wahlweise als schubsteife Platte oder als, vorzugsweise kreuzartiger, Strebenverbund ausgebildet sein. Durch die schubsteife Platte kann lediglich die Steifigkeit des Hilfsrahmens erhöht werden, während der Strebenverbund zusätzlich noch in der Lage ist Kräfte aufzunehmen.

Die gattungsbildenden Druckschriften EP 1 690 779 A1 und DE 10 2009 029 883 A1 beschreiben jeweils einen Hilfsrahmen für ein Kraftfahrzeug, bestehend aus zwei symmetrisch zueinander angeordneten und voneinander beabstandeten Längsträgern, die durch mindestens einen Querträger miteinander verbunden sind. Die Torsionssteifigkeit des Hilfsrahmens wird durch eine an Längs- und Querträgern befestigte schubsteife Platte erhöht. Diese Platte bringt jedoch zusätzliches Gewicht in das Fahrzeug ein und hat im Stand der Technik lediglich die Aufgabe die Torsionssteifigkeit zu erhöhen.

Aufgabe der vorliegenden Erfindung ist es daher einen Hilfsrahmen für ein Kraftfahrzeug und ein Kraftfahrzeug mit einem solchen Hilfsrahmen bereitzustellen, dessen Versteifungsstruktur für weitere Funktionen genutzt werden kann.

Diese Aufgabe wird durch die Merkmale des Patentanspruchs 1 gelöst.

Ein Kraftfahrzeug mit einem erfindungsgemäßen Hilfsrahmen ist in Patentanspruch 7 beansprucht.

Ein Hilfsrahmen eines Vorder- oder Hinterwagens eines Kraftfahrzeugs hat zwei Längsträger, die in Fahrzeugquerrichtung voneinander beabstandet und über wenigstens einen Querträger miteinander verbunden sind, wobei der Hilfsrahmen eine Versteifungsstruktur zur Erhöhung der Torsionssteifigkeit aufweist und wobei ein Lademodul zur kontaktlosen Energieübertragung in die Versteifungsstruktur integrierbar ist.

Indem das Lademodul in die Versteifungsstruktur integriert wird, kann der ohnehin benötigte Bauraum zur Aussteifung des Hilfsrahmens für eine weitere Funktion, nämlich die kontaktlose Energieübertragung auf das Kraftfahrzeug, genutzt werden. Dadurch verringert sich insgesamt der Bauraumbedarf, vor allem in Fahrzeughochrichtung. Das Lademodul ist als fahrzeugseitiger Teil eines Systems zur kontaktlosen Energieübertragung zu verstehen, wie es exemplarisch in den Druckschriften DE 10 2010 042 395 A1 und EP 0 253 345 B1 gezeigt ist. Dabei wird die elektrische Energie (induktiv) von einem vorzugsweise stationär angeordneten Transmitter auf das fahrzeugseitig montierte Lademodul zur weiteren Nutzung übertragen. Zur Wirkungsgradsteigerung ist es notwendig, dass das Lademodul und der Transmitter möglichst nah zueinander liegen. Daher ist eine tiefe Positionierung des (plattenförmigen) Lademoduls am Kraftfahrzeug anzustreben. Die Versteifungsstruktur kann wahlweise als schubsteife Platte oder als, vorzugsweise kreuzartig aufgebauter, Strebenverbund (sog. Strebenkreuz) ausgebildet sein. Durch die schubsteife Platte kann lediglich die Steifigkeit des Hilfsrahmens erhöht werden, während der Strebenverbund zusätzlich noch in der Lage ist Kräfte aufzunehmen.

Die Längsträger des Hilfsrahmens sind vorzugsweise spiegelsymmetrisch angeordnet und können entweder unmittelbar oder mittelbar, beispielsweise über einen Gussknoten, mit dem mindestens einen Querträger zu einer offenen bzw. geschlossenen Rahmenkonstruktion verbunden werden.

In einer bevorzugten Ausführung weist die Versteifungsstruktur eine Freifläche auf, die von dem Lademodul zumindest teilweise ausgefüllt wird. Die Freifläche stellt eine Aussparung vom Material in der Versteifungsstruktur dar und ist vorzugsweise zentral angeordnet. Das Lademodul wird in diese Freifläche eingesetzt, wodurch der Bauraumbedarf in Fahrzeughochrichtung minimal ist. Es ist insbesondere anzustreben, dass Lademodul und Versteifungsstruktur im eingebauten Zustand auf der Unterseite flächenbündig abschließen, um die Bodenfreiheit nicht negativ zu beeinträchtigen.

In einer bevorzugten Ausführung weist das Lademodul ein Abschirmblech und eine Spuleneinheit auf. Zur besseren Funktion der Spuleneinheit ist eine Abschirmung gegenüber umliegenden ferro-magnetischen Bauteilen (beispielsweise Längsträger, Querträger und Versteifungsstruktur) notwendig. Zu diesem Zweck wird die Spuleneinheit von einem vorzugsweise aus Aluminium bestehenden Abschirmblech teilweise eingefasst und zwar so, dass das Abschirmblech sich zwischen den ferro-magnetischen Bauteilen und der Spuleneinheit befindet. Die Spuleneinheit wird während des Betriebs von einem magnetischen Wechselfeld des (geostationären) Transmitters zumindest teilweise durchdrungen, wodurch eine Spannung induziert wird. Eine geeignete Leistungselektronik wandelt diese Spannung und gibt sie an das Bordnetz des Kraftfahrzeugs weiter.

In einer bevorzugten Ausführung ist das Abschirmblech mit der Versteifungsstruktur verbunden. Die von der Versteifungsstruktur aufgenommenen Kräfte und Momente werden somit in das Abschirmblech weitergeleitet, was sich positiv auf die Torsions- bzw. Festigkeitseigenschaften des Hilfsrahmens auswirkt. Durch das Entkopplungselement zwischen Abschirmblech und Spuleneinheit ist letztere vor Beschädigungen durch die dabei entstehenden Verformungen des Abschirmblechs geschützt.

In einer bevorzugten Ausführung ist zwischen Abschirmblech und Spuleneinheit ein Entkopplungselement angeordnet. Die Spuleneinheit ist in der Regel sehr empfindlich gegenüber Biegung und Torsion, die beim Fahrbetrieb im Abschirmblech entstehen können, weshalb eine (gummi-)elastische Lagerung der Spuleneinheit an dem Abschirmblech durch ein Entkopplungselement vorteilhaft ist.

In einer bevorzugten Ausführung ist die Spuleneinheit in Einbaulage geodätisch unterhalb des Abschirmblechs angeordnet. Damit ist ein optimales Zusammenspiel mit einem fahrbahnseitigen Transmitter gewährleistet, während das Abschirmblech gegenüber den ferro-magnetischen Bauteilen des Kraftfahrzeugs nach oben hin abschirmt.

Bei einem Kraftfahrzeug mit einem erfindungsgemäßen Hilfsrahmen ist das Lademodul mit einem elektrischen Energiespeicher verbunden. In einer bevorzugten Ausführung ist der Energiespeicher als Traktionsbatterie ausgebildet. Wird das Kraftfahrzeug nun über einen geostationären, fahrbahnseitigen Transmitter bewegt, so empfängt die Spuleneinheit des Lademoduls in der Versteifungsstruktur des Hilfsrahmens das vom Transmitter ausgesendete magnetische Wechselfeld und eine Spannung wird induziert. Die Spannung gibt die Leistungselektronik an die Traktionsbatterie weiter, die dadurch geladen wird. Zur Fortbewegung des Kraftfahrzeugs kann die Spannung später wieder aus der Traktionsbatterie entnommen werden, um eine E-Maschine anzutreiben.

Weitere Einzelheiten und Vorteile der Erfindung ergeben sich aus der nachstehenden Beschreibung eines bevorzugten Ausführungsbeispiels unter Bezugnahme auf die Zeichnungen.

Darin zeigen:
- Fig. 1: eine Draufsicht auf einen Hilfsrahmen;
- Fig. 2: eine seitliche Schnittansicht eines Hilfsrahmens.

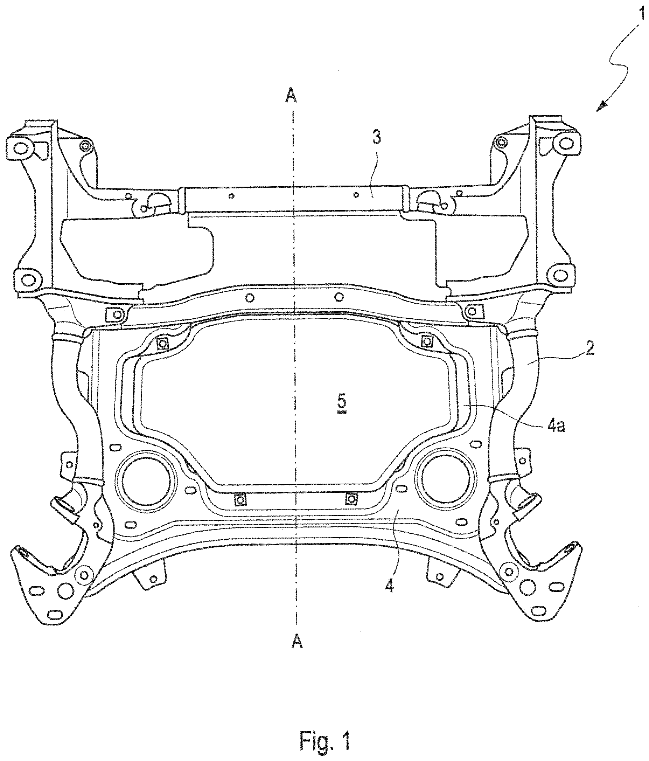

Gemäß Fig. 1 besteht ein Hilfsrahmen 1 für ein Kraftfahrzeug aus zwei bezüglich einer Symmetrielinie A-A spiegelsymmetrisch angeordneten und voneinander beabstandeten Längsträgern 2, die durch einen Querträger 3 miteinander verbunden sind. An dem so gebildeten Hilfsrahmen 1 wird eine vorliegend als schubsteife Platte ausgebildete Versteifungsstruktur 4 zur Erhöhung der Torsionssteifigkeit angeordnet. Die Versteifungsstruktur 4 weist in ihrem Zentrum eine Freifläche 4a auf. In diese Freifläche 4a wird ein Lademodul 5 eingesetzt, das im eingebauten Zustand auf der Unterseite möglichst bündig mit der umliegenden Versteifungsstruktur 4 abschließt. Das Lademodul 5 wird somit zu einem Bestandteil der Versteifungsstruktur 4 und trägt seinerseits zur Versteifung des Hilfsrahmens 1 bei.

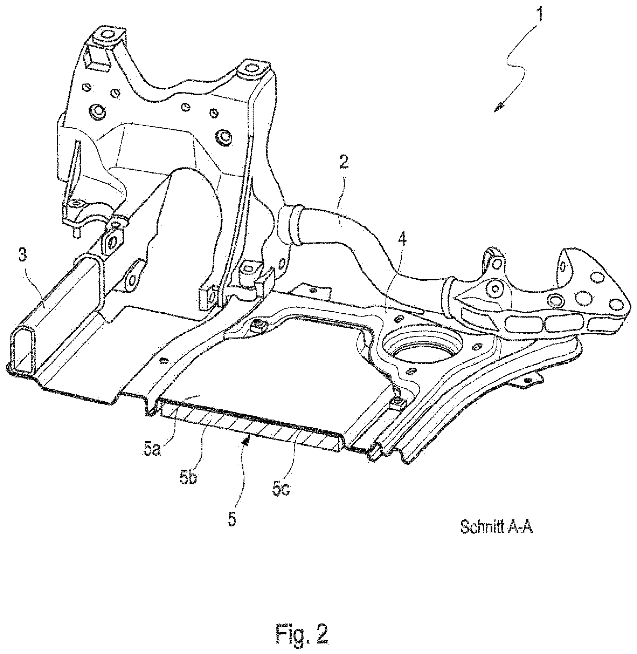

Die Fig. 2 zeigt eine Schnitthälfte des Hilfsrahmens 1 mit einem der beiden Längsträger 2 und dem Querträger 3. Das Lademodul 5 besteht aus einem Abschirmblech 5a, einer Spuleneinheit 5b und einem zwischen Abschirmblech 5a und Spuleneinheit 5b angeordneten Entkopplungselement 5c. Das Abschirmblech 5a, das vorzugsweise aus Aluminium besteht, ist an dessen Rändern mit der Versteifungsstruktur 4 verschraubt, so dass die Versteifungsstruktur 4 Kräfte und Momente in das Abschirmblech 5a einleiten kann. Das Entkopplungselement 5c entkoppelt die Spuleneinheit 5b von den Verformungen des Abschirmblechs 5a. Die Ränder des Abschirmblechs 5a sind zur besseren Schirmung bis über die Seiten der Spuleneinheit 5b nach unten gezogen.

### Liste der Bezugszeichen:

- A-A: Symmetrielinie

- 1: Hilfsrahmen
- 2: Längsträger
- 3: Querträger
- 4: Versteifungsstruktur
- 4a: Freifläche
- 5: Lademodul
- 5a: Abschirmblech
- 5b: Spuleneinheit
- 5c: Entkopplungselement

## Patentansprüche

1. Hilfsrahmen (1) eines Vorder- oder Hinterwagens eines Kraftfahrzeugs mit zwei Längsträgern (2), die in Fahrzeugquerrichtung voneinander beabstandet und über wenigstens einen Querträger (3) miteinander verbunden sind, wobei der Hilfsrahmen (1) eine Versteifungsstruktur (4) zur Erhöhung der Torsionssteifigkeit aufweist, **dadurch gekennzeichnet, dass** ein Lademodul (5) zur kontaktlosen Energieübertragung in die Versteifungsstruktur (4) integriert ist.

2. Hilfsrahmen (1) nach Anspruch 1, **dadurch gekennzeichnet, dass** die Versteifungsstruktur (4) eine Freifläche (4a) aufweist, die von dem Lademodul (5) zumindest teilweise ausgefüllt wird.

3. Hilfsrahmen (1) nach Anspruch 1 oder 2, **dadurch gekennzeichnet, dass** das Lademodul (5) ein Abschirmblech (5a) und eine Spuleneinheit (5b) aufweist.

4. Hilfsrahmen (1) nach Anspruch 3, **dadurch gekennzeichnet, dass** das Abschirmblech (5a) mit der Versteifungsstruktur (4) verbunden ist.

5. Hilfsrahmen (1) nach Anspruch 3 oder 4, **dadurch gekennzeichnet, dass** zwischen Abschirmblech (5a) und Spuleneinheit (5b) ein Entkopplungselement (5c) angeordnet ist.

6. Hilfsrahmen (1) nach einem der Ansprüche 3 bis 5, **dadurch gekennzeichnet, dass** die Spuleneinheit (5b) in Einbaulage geodätisch unterhalb des Abschirmblechs (5a) angeordnet ist.

7. Kraftfahrzeug mit einem Hilfsrahmen (1) nach Anspruch 1, **dadurch gekennzeichnet, dass** das Lademodul (5) mit einem elektrischen Energiespeicher verbunden ist.

8. Kraftfahrzeug nach Anspruch 7, **dadurch gekennzeichnet, dass** der Energiespeicher als Traktionsbatterie ausgebildet ist.

## Claims

1. Subframe (1) of a front or rear chassis section of a motor vehicle, having two longitudinal supports (2) which are separated from one another in the transverse direction of the motor vehicle and are connected to one another by means of at least one transverse support (3), wherein the subframe (1) has a stiffening structure (4) for increasing the torsional stiffness, **characterised in that** a charging module (5) for contactless energy transmission is integrated into the stiffening structure (4).

2. Subframe (1) according to claim 1, **characterised in that** the stiffening structure (4) has a free surface (4a), which is at least partially filled by the charging module (5).

3. Subframe (1) according to claim 1 or 2, **characterised in that** the charging module (5) has a screening plate (5a) and a coil unit (5b).

4. Subframe (1) according to claim 3, **characterised in that** the screening plate (5a) is connected to the stiffening structure (4).

5. Subframe (1) according to claim 3 or 4, **characterised in that** a decoupling element (5c) is provided between the screening plate (5a) and the coil unit (5b).

6. Subframe (1) according to any one of claims 3 to 5, **characterised in that** the coil unit (5b) is arranged geodetically below the screening plate (5a) in the installed position.

7. Motor vehicle having a subframe (1) according to claim 1, **characterised in that** the charging module (5) is connected to an electrical energy storage unit.

8. Motor vehicle according to claim 7, **characterised in that** the energy storage unit is configured as a traction battery.

## Revendications

1. Faux-châssis (1) d'une partie avant ou d'une partie arrière d'un véhicule automobile comprenant deux longerons (2), qui sont espacés l'un de l'autre dans la direction transversale de véhicule et qui sont reliés l'un à l'autre par l'intermédiaire d'au moins une traverse (3), le faux-châssis (1) présentant une structure de renfort (4) servant à augmenter la rigidité à la torsion, **caractérisé en ce qu'**un module de charge (5) est intégré dans la structure de renfort (4) pour la transmission sans contact de l'énergie.

2. Faux-châssis (1) selon la revendication 1, **caractérisé en ce que** la structure de renfort (4) présente une surface libre (4a), qui est remplie au moins en partie par le module de charge (5).

3. Faux-châssis (1) selon la revendication 1 ou 2, **caractérisé en ce que** le module de charge (5) présente une tôle de protection (5a) et une unité de bobines (5b).

4. Faux-châssis (1) selon la revendication 3, **caractérisé en ce que** la tôle de protection (5a) est reliée à la structure de renfort (4).

5. Faux-châssis (1) selon la revendication 3 ou 4, **caractérisé en ce qu'**un élément de découplage (5c) est agencé entre la tôle de protection (5a) et l'unité de bobines (5b).

6. Faux-châssis (1) selon l'une quelconque des revendications 3 à 5, **caractérisé en ce que** l'unité de bobines (5b) est agencée, dans l'état monté, au-dessous, d'un point de vue géodésique, de la tôle de protection (5a).

7. Véhicule automobile comprenant un faux-châssis (1) selon la revendication 1, **caractérisé en ce que** le module de charge (5) est relié à un accumulateur d'énergie électrique.

8. Véhicule automobile selon la revendication 7, **caractérisé en ce que** l'accumulateur d'énergie est réalisé sous la forme d'une batterie de traction.
